# EUROPÄISCHE PATENTSCHRIFT

(11) **EP 2 584 353 B1**
(45) Veröffentlichungstag und Bekanntmachung des Hinweises auf die Patenterteilung: **24.01.2018**
(21) Anmeldenummer: 11185620.9
(22) Anmeldetag: 18.10.2011
(51) Int. Cl.: G01N 30/74, G01N 15/02, G01N 21/47, G01N 21/53, G01N 21/51, G01N 21/05

(54) **Blendensystem für Vielwinkellichtstreudetektoren**
Aperture system for multi-angle light scattering detectors
Système à pupilles pour détecteurs à diffusion de lumière multi-angle

(43) Veröffentlichungstag der Anmeldung: 24.04.2013
(73) Patentinhaber: Postnova Analytics GmbH, 86899 Landsberg (DE)
(72) Erfinder: Fröse, Diethelm, 12459 Berlin (DE); Welz, Roland, 86956 Schongau (DE)
(74) Vertreter: Hoffmann Eitle

(56) Entgegenhaltungen:
- WO-A1-2004/106916
- DE-A1- 3 813 718
- US-A1- 2007 195 324
- US-A1- 2009 091 757

## Beschreibung

### Technisches Gebiet

Die Erfindung betrifft eine Vorrichtung zur Messung der Lichtstreueigenschaften einer Probe in einem flüssigem Medium, die Verwendung dieser Vorrichtung sowie ein Verfahren zur Messung des an einer in einem flüssigen Medium befindlichen Probe gestreuten Lichtes.

### Stand der Technik

Die Vermessung der statischen Lichtstreuung wird zur Charakterisierung (Größe, Masse, Form und Struktur) von Molekülen oder kolloidalen Substanzen herangezogen. Hierbei handelt es sich um eine absolute Quantifizierung, die ohne vorherige Kalibrierung oder Benutzung von Standardproben auskommt. Eine Probe wird mit einem Laserstrahl beleuchtet und das gestreute Licht unter verschiedenen Streuwinkeln gemessen.

Das Prinzip der Lichtstreuung ist in der Natur weitverbreitet. So kann es z.B. beim Sonnenuntergang oder beim Sichtbarwerden von Staubpartikeln beobachtet werden. Lichtstrahlen treffen auf ein stark streuendes Medium und werden von Partikeln von ihrem geometrisch vorgeschriebenen Weg abgelenkt. Dabei wird die Intensität der Lichtstrahlen durch Absorption und Streuung abgeschwächt. Die Streuung ist die Grundlage verschiedener physikalischer Phänomene, wie z.B. Beugung, Brechung und Reflexion.

Die Streuung kann in inelastische, quasielastische und elastische Streuung unterteilt werden, die sich durch ihre Frequenzverschiebung unterscheiden. Bei der inelastischen Streuung tritt eine Frequenzverschiebung von etwa 10¹¹ bis 10¹³ Hz auf. Bei der quasielastischen Streuung, bei der Licht zusätzlich mit Translations- bzw. Rotationsquanten eines Moleküls wechselwirkt, tritt eine Frequenzverschiebung von 10 bis 10⁶ Hz auf. Bei der elastischen Lichtstreuung (z.B. der statischen Lichtstreuung) kommt es zu keiner Änderung der Wellenlänge (auch als kohärente Streustrahlung bezeichnet).

Das zugrunde liegende Prinzip der Lichtstreuung lässt sich an einem sehr kleinen, optisch isotropen Gasmolekül veranschaulichen. Die Elektronen des Moleküls werden durch die auftreffende elektromagnetische Welle in eine Schwingung mit der Frequenz der erregenden Lichtquelle versetzt. Der so entstandene oszillierende Dipol strahlt wiederum elektromagnetische Strahlung derselben Frequenz ab, wobei die Intensität der Strahlung von der Stärke des induzierten Dipols abhängt, d.h. je polarisierbarer das Molekül ist, desto stärker der Dipol und desto höher die Intensität der emittierten Strahlung.

Wird eine Probe, beispielweise eine Suspension, in der sich mehrere Makromoleküle befinden, mit einem Laserstrahl beleuchtet, emittiert jedes Makromolekül Strahlung. Die Summe der Intensitäten der emittierten Strahlung ist proportional zur Konzentration der Makromoleküle in der Suspension sowie der molaren Masse der Moleküle.

Des Weiteren kann aus der Winkelabhängigkeit der gestreuten Lichtintensitäten die Größe der im Kolloid enthaltenen Moleküle berechnet werden, da das an den verschiedenen Streuzentren im Makromolekül gestreute Licht interferiert und ein winkelabhängiges Streumuster erzeugt. Hierbei werden jeweils die Mittelwerte der Größe der in einer Messzelle befindlichen Teilchen bestimmt.

Im Stand der Technik sind Messgeräte beschrieben, die die Streueigenschaften von kolloidalen Flüssigkeiten messen und zur Charakterisierung der Stoffeigenschaften heranziehen. So offenbart EP 0 182 618 zum Beispiel eine Vorrichtung, welche die Messung der statischen Lichtstreuung mittels einer Messzelle beschreibt. Die Messzelle kann mit einem chromatographischen Aufbau gekoppelt werden, so dass die Teilchen nach Größe getrennt durch die Messzelle fließen. Hierfür ist eine runde Glaszelle mit einer Längsbohrung versehen, durch welche ein Flüssigkeitsstrom mit den enthaltenen Teilchen geleitet und mit einem Laserstrahl beleuchtet wird. Um die runde Glaszelle sind unter verschiedenen Winkeln Detektoren angeordnet, die das Streulicht aufnehmen.

Diese Technologie wurde zuerst in US 4, 616, 927 und EP 0 182 618 beschrieben. Darin wird die Messung des Streulichts unter mehreren verschiedenen Winkeln offenbart. Der beobachtete Streubereich wird über Blenden auf einige Nanoliter beschränkt.

In EP 0 626 064 wird eine Weiterentwicklung beschrieben, bei der unter 2 Winkeln gemessen wird, wobei das unter 15 Grad gestreute Licht mittels eines Linsen- und Blendensystems gesammelt wird.

In der US 6, 052, 184 wird das gestreute Licht mittels Lichtleitern gesammelt, wobei diese jedoch nur einen sehr kleinen Flüssigkeitsbereich beobachten. Der Flüssigkeitsstrom wird hier senkrecht zum einfallenden Lichtstrahl geführt.

Eine weitere Vorrichtung, in der der Flüssigkeitsstrom ebenfalls senkrecht zum einfallenden Lichtstrahl durch die Messzelle geführt wird, ist in der WO 2010/036736 beschrieben. Die notwendige passgenaue Fixierung der Messzelle erfolgt über geeignete Vorsprünge der Haltevorrichtung, die in die Bohrung der Messzelle hineinragen.

In der in WO 2010/036736 beschriebenen Vorrichtungen werden zylinderförmige, küvettenartige Glasmesszellen mit einer gewölbten Außenseite verwendet, die horizontal mit einem Laserstrahl beleuchtet aber vertikal durchflossen werden.

Um innerhalb einer derartigen Messzelle die Ausbildung eines Flüssigkeitsstroms mit einem laminaren Strömungsprofil zu gewährleisten, kann der Flüssigkeitsstrom mit Hilfe einer geeigneten Führung in drei einzelne Flüssigkeitsströme aufgeteilt werden, die jeweils durch eine von drei radial angeordneten Rillen in die Messzelle geleitet werden. Diese Form der Anströmung der Messzelle wird zum Beispiel in WO 98/52013 offenbart.

Bei der Verwendung der in WO 2010/036736 beschriebenen Glasmesszellen für die Messung statischer Vielwinkellichtstreuung in einem Winkelbereich von weniger als 7° bis über 164° treten jedoch folgende Probleme auf.

Der Durchmesser der Innenbohrung und damit das Volumen der küvettenartigen Messzellen sollte zur Vermeidung von Peak-Verbreiterungen im erhaltenen Messsignal und zur Aufrechterhaltung einer homogenen Strömung innerhalb der Messzelle grundsätzlich möglichst klein gehalten werden. Dies führt allerdings zur Verlagerung von Remissionen (nicht gerichteten Reflexionen), die durch den Laserstrahl an den Grenzflächen zwischen dem Messzellenglas und der hindurchströmenden, die Probe enthaltende Flüssigkeit verursacht werden, nahe an das Streuzentrum/die Streuzentren der jeweiligen Probe innerhalb der Messzelle heran. Aus diesem Grund kommt es bei der Verwendung von Messzellen mit einem kleinen Volumen eher zu einer Störung des zu erfassenden Streulichtsignals durch die beschriebenen Remissionen. Die Remissionen sind aufgrund minimaler Laserpositionsschwankungen nicht stabil und führen zu Schwingungen, Instabilitäten und Übersteuerungen in den Detektorensignalen, wenn sie zu den Detektoren gelangen.

In DE 38 12 718 wird eine Vorrichtung zur Messung der Lichtstreueigenschaften einer Probe in einem flüssigen Medium mittels Vielwinkellichtstreuung offenbart, in der die Verringerung des störenden Einflusses von Streulicht aus nicht beobachteten Winkelbereichen zur Verbesserung des Messergebnisses mittels einer Kollimatoranordnung erreicht werden soll. In DE 38 12 718 werden ferner die Verwendung von senkrecht zu den Schlitzen der Kollimatoranordnung verlaufenden Bohrungen sowie das Aufrauen und/oder Schwärzen der Kollimatoranordnung im Bereich der Schlitze und gegebenenfalls der Bohrungen als weitere Maßnahmen zum verbesserten Ausschluss von unerwünschter Streulichtstrahlung vorgeschlagen.

Die Messung der Lichtstreueigenschaften einer Probe in einem flüssigen Medium ist zum Beispiel auch aus US 2007/0195324 bekannt und in US 2009/0091757 wird die Messung der Lichtstreueigenschaften von Proben offenbart, die zuvor mittels eines chromatographischen Verfahrens aufgetrennt wurden.

Grundsätzlich sind zur Messung der winkelabhängigen Streulichtintensität einer Probe zwei Punkte von besonderer Bedeutung:
1. In jeden Detektor darf nur das Streulicht aus einem möglichst kleinem Winkelbereich einfallen.
2. Licht, dass bedingt durch Remissionen an den Grenzflächen Messzellenglas/Flüssigkeit (enthaltend die Probe) bzw. Messzellenglas/Luft in den jeweiligen Detektor einfallen könnte, muss abgeschirmt werden.

Bisher wurden die dafür erforderlichen Ausblendungen mit Hilfe von Bohrungen innerhalb eines die Messzelle umgebenden Bauteils realisiert. Das Problem hierbei ist, dass Licht innerhalb dieser Bohrungen an der jeweiligen Wandung reflektiert wird und so, wenn auch in abgeschwächter Form, in einzelne Detektoren einfallen und die Messungen verfälschen kann. Da die Bohrungen einerseits einen kleinen Durchmesser haben müssen, andererseits aber relativ lang sein müssen, um den Winkelbereich des einfallenden Streulichts hinreichend einschränken zu können, ist es nicht möglich, die Innenseite der Bohrungen homogen mit einer lichtabsorbierenden Substanz zu beschichten.

### Darstellung der Erfindung

Die Aufgabe der Erfindung besteht darin, eine Messvorrichtung für die Messung statischer Vielwinkellichtstreuung in einem Winkelbereich von weniger als 7° bis über 164° bereitzustellen, in der eine lichtdurchlässige Messzelle verwendet wird, in die eine Probe eingefüllt wird bzw. die von einer Probe durchflossen wird und die quer zur Einfüllrichtung bzw. quer zur Flussrichtung der Probe mit einem Laserstrahl beleuchtet wird, und die nicht die für die aus dem Stand der Technik bekannten Vorrichtungen beschriebenen Nachteile im Hinblick auf den störenden Einfluss von Streulicht aus nicht beobachteten Winkelbereichen und Remissionen aufweist und eine Verbesserung der Messsensitivität erreicht.

Diese Aufgabe wird durch die Vorrichtung nach Anspruch 1 und das Verfahren nach Anspruch 9 gelöst.

Erfindungsgemäß ist eine Vorrichtung zur Messung der Lichtstreuungseigenschaften einer Probe in einem flüssigen Medium, wobei das flüssige Medium mit der Probe in einer Messzelle quer zur Einfüllrichtung bzw. quer zur Flussrichtung des flüssigen Mediums in die/der Messzelle von einem Laserstrahl beleuchtet wird, umfassend einen Laser, eine zylinderförmige Messzelle, ein erstes inneres Blendensystem, ein zweites äußeres Blendensystem und mindestens zwei Detektoren, wobei die Detektoren außerhalb des zweiten äußeren Blendensystems angeordnet sind, so dass sie das an der Probe gestreute Licht in festgelegten, unterschiedlichen Winkelbereichen erfassen, dadurch gekennzeichnet, dass das erste innere Blendensystem und das zweite äußere Blendensystem um die Achse der Messzelle herum kreisförmig und konzentrisch ausgebildet und angeordnet sind, wobei das zweite äußere Blendensystem derart angeordnet ist, dass nur solches Licht eines bestimmten Winkelbereichs in den entsprechenden Detektor fällt, welches das erste innere Blendensystem passiert hat, und die Messzelle, das erste innere Blendensystem und das zweite äußere Blendensystem sowie die Detektoren auf einer optischen Achse liegen, so dass die einzelnen Detektoren festgelegte, unterschiedliche Winkelbereiche des an der Probe gestreuten und aus der Messzelle austretenden Lichts erfassen. Diese Anordnung ermöglicht, dass nur Licht eines bestimmten Winkelbereichs in den entsprechenden Detektor fällt und dass Streulicht aus nicht beobachteten Winkelbereichen sowie Remissionen ausgeblendet werden.

Im Rahmen der vorliegenden Erfindung wurde überraschenderweise herausgefunden, dass bei der Detektion von an einer Probe gestreutem Licht (Streulicht) unter einem bestimmten Winkel ein System aus zwei Blenden, die hintereinander angeordnet sind, geeignet ist, Störeinflüsse durch Streulicht aus nicht beobachteten Winkelbereichen und Remissionen zu minimieren. Streulicht aus nicht beobachteten Winkelbereichen sowie Remissionen, d.h. an den Grenzflächen zwischen der Messzelle und dem hindurchströmenden, die Probe enthaltenden, flüssigen Medium abgelenktes Licht, können sich in dem Doppelblendensystem der erfindungsgemäßen Vorrichtung zwar zwischen den Blenden ausbreiten, erreichen die Detektoren aber nicht mehr.

Insbesondere wird durch ein erstes inneres Blendensystem, das konzentrisch um die Achse der Messzelle angeordnet ist, zunächst eine Einschränkung auf ein definiertes Streuvolumen vorgenommen und gleichzeitig auch ein bestimmter zu detektierender Winkelbereich ausgewählt. Ein zweites äußeres Blendensystem, das nahe den Detektoren konzentrisch um das erste innere Blendensystem angeordnet ist, gewährleistet dann, dass nur solches Licht eines bestimmten Winkelbereichs in den entsprechenden Detektor fällt, welches das erste innere Blendensystem passiert hat, und dass das an den Grenzflächen zwischen der Messzelle und dem hindurchströmenden, die Probe enthaltenden, flüssigen Medium abgelenkte und damit Remissionen verursachende Licht ausgeblendet wird.

Dementsprechend enthält die erfindungsgemäße Vorrichtung ein Doppelblendensystem bestehend aus einem ersten inneren und einem zweiten äußeren Blendensystem, die beide um die Achse der Messzelle herum kreisförmig und konzentrisch ausgebildet und angeordnet sind.

Im Zusammenhang mit der vorliegenden Erfindung bedeutet der Begriff "kreisförmig" bezogen auf das erste innere und das zweite äußere Blendensystem, das diese jeweils die Form der Mantelfläche eines geraden Kreiszylinders beschreiben.

Die beiden Blendensysteme weisen jeweils mehrere nebeneinander angeordnete Blendenöffnungen auf und sind bevorzugt einstückig ausgebildet, wobei die Zahl der Blendenöffnungen in jeder der beiden Blendensysteme der Zahl der in der erfindungsgemäßen Vorrichtung verwendeten Detektoren entspricht. Die Blendensysteme können sowohl aus Kunststoff, wie z.B. PEEK, PMMO, PA, etc., als auch aus Metall, wie z.B. Aluminium, verschiedenen Stählen, wie z.B. Invar, Edelstahl, Titan, sowie Nichteisenmetallen, wie z.B. Messing, gefertigt sein.

Das erste innere Blendensystem ist nahe der Messzelle konzentrisch um dessen Achse herum angeordnet und hat einen Abstand von der Messzelle im Bereich von 0,1-1 mm, bevorzugt 0,4-0,8 mm und besonders bevorzugt 0,4-0,6 mm. Das zweite äußere Blendensystem ist nahe den Detektoren konzentrisch um das erste innere Blendensystem angeordnet und hat einen Abstand von den Detektoren im Bereich von 1-60 mm, bevorzugt 15-45 mm und besonders bevorzugt 32-36 mm. Der Abstand zwischen dem ersten inneren und dem zweiten äußeren Blendensystem beträgt 15-20 mm, bevorzugt 16-17 mm und besonders bevorzugt 16,4-16,6 mm.

In einer bevorzugten Ausführungsform beträgt der Abstand des ersten inneren Blendensystems von der Messzelle 0,4-0,6 mm, bevorzugt 0,5 mm, der Abstand der zweiten äußeren Blendensystems von den Detektoren 32-36 mm, bevorzugt 34,2 mm, und der Abstand zwischen dem ersten inneren und dem zweiten äußeren Blendensystem 16,4-16,6 mm, bevorzugt 16,5 mm.

In einer Ausführungsform sind das erste innere und das zweite äußere Blendensystem jeweils als Schlitzblenden ausgebildet, wobei die Zahl der Schlitze in den beiden Blendensystemen der Zahl der verwendeten Detektoren, die um das zweite äußere Blendensystem angeordnet sind, entspricht. Die Blendensysteme weisen zusätzlich jeweils eine Eintrittsöffnung und eine Austrittsöffnung für den Laserstrahl auf. Die einzelner. Schlitze sind quer, d.h. in einem Winkel von 90°, zur Kreisebene der kreisförmig ausgebildeten Blendensysteme angeordnet und bilden so eine kammförmige Blende.

In einer alternativen Ausführungsform können die Blendenöffnungen in dem ersten inneren und dem zweiten äußeren Blendensystem jeweils als Lochblenden ausgebildet sein, wobei die einzelnen Blendenlöcher rechteckig, quadratisch oder rund sein können.

Bevorzugt sind das erste innere und das zweite äußere Blendensystem jeweils als kammförmige Schlitzblenden ausgebildet.

Insbesondere sind die Messzelle, das erste innere und das zweite äußere Blendensystem sowie die Detektoren so in einer Ebene (im Folgenden auch als Detektionsebene bezeichnet) angeordnet, dass die Messzelle, die jeweiligen Schlitze in den beiden Blendensystemen und die Detektoren auf einer Linie, bevorzugt einer Geraden, liegen und dass die einzelnen Detektoren festgelegte, unterschiedliche Winkelbereiche des an der Probe gestreuten und aus der Messzelle austretenden Lichts erfassen.

In einer bevorzugten Ausführungsform sind die Schlitze der beiden Blendensysteme hintereinander und nicht versetzt angeordnet und die Gerade erstreckt sich lotrecht von der gekrümmten Außenseite der Messzelle.

Die Detektoren sind in unterschiedlichen, festgelegten Winkeln von 3° bis 172°, bevorzugt von 7° bis 164°, bezogen auf den Strahlengang des Lasers durch die Messzelle, außerhalb des zweiten äußeren Blendensystems um die gesamte Messzelle herum in der Detektionsebene angeordnet, so dass sie an der Probe gestreutes Licht in den jeweiligen Winkeln bzw. in begrenzten Winkelbereichen um diese Winkel herum erfassen. Bevorzugt sind die Detektoren kreisförmig und konzentrisch um die Messzelle herum in der Detektionsebene angeordnet.

Die erfindungsgemäße Vorrichtung ermöglicht somit die Beobachtung des an der Probe gestreuten Lichts in festgelegten, unterschiedlichen Winkelbereichen von 3° bis 172° und bevorzugt von 7° bis 164°.

Im Zusammenhang mit der vorliegenden Erfindung bezeichnet der Begriff "Winkelbereich" einen bestimmten Winkel, bezogen auf den Strahlengang des Lasers durch die Messzelle, innerhalb der Detektionsebene einschließlich eines Bereichs um diesen Winkel von +/- 0,95° und bevorzugt von +/- 0,15°.

Die erfindungsgemäße Vorrichtung umfasst 2-25 und bevorzugt 7-21 Detektoren.

In einer bevorzugten Ausführungsform umfasst die erfindungsgemäße Vorrichtung 7, 14 oder 21 Detektoren und besonders bevorzugt 21 Detektoren.

Um die Installation von bis zu 25 Detektoren in der Detektionsebene der erfindungsgemäßen Vorrichtung zu ermöglichen, sind die Detektoren alternierend um die gesamte Messzelle herum angeordnet, wobei "alternierend" bedeutet, dass Detektoren mit benachbarten Beobachtungswinkeln immer auf gegenüberliegenden Seiten der Messzelle innerhalb der Detektionsebene angeordnet sind.

Ein Detektor ist eine im Stand der Technik beschriebene Vorrichtung, welche einfallendes Licht in Abhängigkeit von dessen Intensität in elektrische Signale umwandelt, was z.B. mittels lichtempfindlicher Dioden oder Photomultiplier erfolgen kann, und an entsprechende Verarbeitungsgeräte weiterleitet, die die gemessenen Signale in die gewünschten Einheiten umrechnen. Besonders bevorzugte Detektoren sind Hybridphotodioden. Dabei handelt es sich um die Kombination aus einer Photodiode mit einem integrierten Verstärker. Eine derartige Kombination ermöglicht eine hohe Empfindlichkeit bei geringem Dunkelrauschen und einem gutem Preisleistungsverhältnis.

In einer Ausführungsform haben die Schlitze des ersten inneren und des zweiten äußeren Blendensystems unabhängig vom beobachteten Winkelbereich des an der Probe gestreuten Lichts alle die gleiche Breite in einem Bereich von 0,1-3,0 mm, bevorzugt 0,2-1,5 mm und besonders bevorzugt 0,2-0,8 mm.

In einer bevorzugten Ausführungsform haben das erste innere und das zweite äußere Blendensystem in Abhängigkeit vom beobachteten Winkelbereich des an der Probe gestreuten Lichts unterschiedliche Schlitzbreiten, wobei die Schlitzbreiten des ersten inneren und des zweiten äußeren Blendensystems für einen gegebenen zu beobachtenden Winkelbereich des an einer Probe gestreuten Lichts gleich sind. Durch die unterschiedlichen Schlitzbreiten wird gewährleistet, dass die Unterschiede in der Intensität des in die Detektoren einfallenden Streulichts für die jeweils beobachteten Winkelbreiche möglichst gering sind.

Grundsätzlich streut eine Probe eingestrahltes Licht in alle Richtungen, wobei die Streulichtintensität für die jeweils beobachteten Winkelbreiche von der Größe der Probenmoleküle oder -teilchen abhängt. Eine unterschiedliche Streulichtintensität kann daher unter anderem daraus resultieren, dass in Abhängigkeit von der Größe einzelner Probenmoleküle oder -teilchen eingestrahltes Licht an einer Probe nicht in alle Richtungen gleich stark gestreut wird, sondern dass es zu einer gerichteten Streuung kommt, die zu einer höheren Streulichtintensität bei kleineren Beobachtungswinkeln führt. Bei gleicher Größe der Probenmoleküle oder -teilchen ergibt sich zudem in Abhängigkeit vom Beobachtungswinkel ein unterschiedliches Streuvolumen, das winkelabhängig ebenfalls zu unterschiedlichen Streulichtintensitäten führt. Dabei sind das Streuvolumen und damit die Streulichtintensität für kleinere Beobachtungswinkel grundsätzlich höher als für größere Beobachtungswinkel. Durch die Verwendung unterschiedlicher Schlitzbreiten in Abhängigkeit vom beobachteten Winkelbereich des an einer Probe gestreuten Lichts können die unterschiedlichen Streulichtintensitäten in gewissen Grenzen nivelliert werden, so dass die Intensitätsunterschiede des in die Detektoren einfallenden Streulichts für die jeweils beobachteten Winkelbreiche möglichst gering ausfallen.

Im Fall kleiner und sehr großer Beobachtungswinkel trägt zusätzlich das Licht des aus der Messzelle austretenden zur Beleuchtung der Probe verwendeten Laserstrahls zur Erhöhung der Streulichtintensität bei.

Grundsätzlich werden im Fall höherer Streulichtintensitäten, wie sie z.B. für kleinere Winkelbereiche auftreten können, Schlitze mit einer geringeren Breite in dem Doppelblendensystem der erfindungsgemäßen Vorrichtung verwendet.

In einer besonders bevorzugten Ausführungsform werden die folgenden Beobachtungswinkel und Schlitzbreiten verwendet:

**Tabelle 1: Beobachtungswinkel und Schlitzbreiten**

| **Beobachtungswinkel** | **Schlitzbreite [mm]** |
|---|---|
| 3°-7° | 0.2 |
| 12° | 0.3 |
| 20° | 0.5 |
| 28°-148° | 0.8 |
| 156° | 0.7 |
| 164°-172° | 0.5 |

Bei der erfindungsgemäßen Vorrichtung handelt es sich um einen Vielwinkellichtstreudetektor (MALS [Multi-Angle Light Scattering]-Detektor), der mit einem zuvor beschriebenen Doppelblendensystem ausgestattet ist.

Als Probe, deren Lichtstreuungseigenschaften mit der erfindungsgemäßen Vorrichtung gemessen werden können, eignen sich alle Moleküle und partikulären Teilchen mit einer Größe von 10 nm - 1000 nm, bevorzugt 26,6 nm - 532 nm und/oder einem Molekulargewicht von 1000 Da - 10⁹ Da. Proben zur Vermessung mit der erfindungsgemäßen Vorrichtung sind z.B. Proteine aus den Bereichen der pharmazeutischen Industrie und der Forschung, Nanopartikel und Kohlenstoffnanoröhrchen (Carbon Nanotubes) sowie natürliche und synthetische Polymere.

Die Probe kann in dem flüssigen Medium gelöst oder suspendiert vorliegen.

Als flüssiges Medium zur Verwendung in der erfindungsgemäßen Vorrichtung können wässrige und nicht wässrige organische Lösungsmittel verwendet werden. Bevorzugt werden Lösungsmittel verwendet, die üblicherweise in der Hochleistungsflüssigkeitschromatographie (engl. High Performance Liquid Chromatography, HPLC) oder der Feldflussfraktionierung (FFF) eingesetzt werden. Beispiele umfassen wässrige Lösungen von 0,5 - 5 g/l NaCl und 0,1 - 5 g/l Natriumdodecylsulfat (Sodium dodecyl sulfate, SDS) sowie die organischen Lösungsmittel Tetrahydrofuran (THF), Toluol, Aceton, Methanol, Ethanol, Chloroform, Dimethylformamid (DMF) und Dimethylsulfoxid (DMSO) sowie Mischungen davon.

In der erfindungsgemäßen Vorrichtung, wird eine zylinderförmige Messzelle verwendet.

Im Zusammenhang mit der vorliegenden Erfindung bedeutet der Begriff "zylinderförmige Messzelle" eine Messzelle, die die Form eines geraden Kreiszylinders aufweist.

Eine Messzelle zur Verwendung in der erfindungsgemäßen Vorrichtung weist eine zentrale Bohrung entlang der Achse der Messzelle auf. Die Bohrung erlaubt die Zu- und Ableitung des flüssigen Mediums, das die Probe enthält.

Bei der Bohrung der Messzelle der erfindungsgemäßen Vorrichtung handelt es sich entweder um eine Vertiefung oder einen Durchbruch mit einem runden Querschnitt, die/der konzentrisch zur Achse der Messzelle angeordnet ist, so dass die Messzelle entweder eine oder zwei runde Öffnungen aufweist.

In einer bevorzugten Ausführungsform handelt es sich bei der Bohrung um einen Durchbruch.

Ferner ist eine Messzelle zur Verwendung in der erfindungsgemäßen Vorrichtung aus einem lichtdurchlässigem Material geformt, das den Eintritt, Durchtritt und Austritt des Laserstrahls erlaubt.

In einer Ausführungsform ist die Messzelle aus Glas, Polymer oder einer Kombination der genannten Materialien oder einer Flüssigkeit hergestellt und weist eine Brechzahl auf, die der Brechzahl des flüssigen Mediums, das die zu vermessende Probe enthält, im Wesentlichen entspricht und die höher ist als die Brechzahl von Luft. In einer bevorzugten Ausführungsform ist die Messzelle aus Glas.

Im Zusammenhang mit der vorliegenden Erfindung bedeutet der Begriff "im Wesentlichen entspricht" bezüglich der Brechzahl der Messzelle und der Brechzahl des flüssigen Mediums, dass die jeweiligen Brechzahlen möglichst ähnlich sind und um nicht mehr als höchstens 0-0,5, bevorzugt höchstens 0-0,3 und stärker bevorzugt höchstens 0-0,2 voneinander abweichen. In einer besonders bevorzugten Ausführungsform beträgt die Abweichung nicht mehr als höchstens 0-0,13.

Die Brechzahl, früher Brechungsindex oder Brechungskoeffizient, ist eine Materialkonstante und beschreibt die Ausbreitung des Lichtes, d.h. elektromagnetischer Wellen, in einem optisch dichten Medium. Sie kann aus dem Verhältnis zwischen Phasengeschwindigkeit des Lichtes im Vakuum und seiner Phasengeschwindigkeit im jeweiligen Medium bestimmt werden. So beträgt die Brechzahl z.B. für sichtbares Licht im Vakuum exakt 1, für Luft auf Meeresniveau 1,000292, für Quarzglas 1,46 und für Polymere ungefähr 1,5.

Der Begriff "Polymer" bezeichnet eine chemische Verbindung, die aus Ketten oder verzweigten Molekülen besteht, die aus gleichen oder gleichartigen Einheiten aufgebaut sind. Beispiele hierfür sind Polymere aus Polyethylen, Polypropylen, Polyvinylchlorid, Polymethylmethacrylat, Polyester oder Polyurethan.

In einer Ausführungsform ist die Messzelle im Bereich ihrer gekrümmten Oberfläche, durch die das an der Probe gestreute Licht austritt, optisch poliert, um Winkelverfälschungen oder die Streuung des Lichts an den optischen Übergängen zu minimieren. Die Oberfläche kann mittels bekannter Standardverfahren poliert werden. So kann die Oberfläche von z.B. Quarzglas durch Flammpolieren und mechanisches Polieren bearbeitet werden. Auch das Polieren mittels Laserstrahlen ist möglich.

Um eine störungsfreie Probenmessung zu gewährleisten, ist es erfindungsgemäß bevorzugt während der Probenmessung turbulente Strömungen innerhalb der Bohrung der Messzelle zu vermeiden und stattdessen ein laminares Strömungsprofil innerhalb der Bohrung zu erzeugen.

In einer Ausführungsform umfasst die erfindungsgemäße Vorrichtung daher neben einem Laser, einer zylinderförmigen Messzelle, einem ersten inneren Blendensystem, einem zweiten äußeren Blendensystem und den mindestens zwei Detektoren ferner eine Halterung zur Aufnahme des Lasers, der zylinderförmigen Messzelle, des ersten inneren Blendensystems, des zweiten äußeren Blendensystems und der mindestens zwei Detektoren, wobei die Halterung dadurch gekennzeichnet ist, dass sie im dem Bereich zur Aufnahme der Messzelle drei radial angeordnete Rillen aufweist, über die das flüssige Medium, das die zu vermessende Probe enthält, in die Bohrung der Messzelle geleitet wird. Im Einzelnen verlaufen die drei radial angeordneten Rillen sternförmig innerhalb einer planparallel zu einer der beiden flachen Seiten der zylinderförmigen Messzelle angeordneten Fläche der Halterung und treffen sich im Bereich der Bohrung der Messzelle. Eine derartige Anordnung wird zum Beispiel in WO 98/52013 beschrieben.

Das flüssige Medium, das die Probe enthält, wird mit Hilfe einer geeigneten Führung in drei Flüssigkeitsströme aufgeteilt, die jeweils durch eine der drei Rillen an einer der beiden flachen Seiten der zylinderförmigen Messzelle entlang in Richtung der zentralen Bohrung der Messzelle geleitet werden. Im Bereich der zentralen Bohrung der Messzelle werden die drei Flüssigkeitsströme vereint und, bevorzugt von unten nach oben, in die Bohrung der Messzelle geleitet. Diese Form der Anströmung der zentralen Bohrung der Messzelle der erfindungsgemäßen Vorrichtung gewährleistet die Ausbildung eines Flüssigkeitsstroms mit einem laminaren Strömungsprofil in der Bohrung der Messzelle während der Probenmessung.

In einer bevorzugten Ausführungsform sind die drei radial verlaufenden Rillen in einem Winkel von jeweils 120° zueinander angeordnet.

In WO 2010/036736 wird eine Vorrichtung beschriebenen, in der die notwendige Fixierung der verwendeten Messzelle in der Halterung über geeignete Vorsprünge der Haltevorrichtung, die in die Bohrung der Messzelle hineinragen, erfolgt. Im Gegensatz dazu wird die Messzelle in der erfindungsgemäßen Vorrichtung von außen durch eine entsprechende Form der Halterung in der gewünschten Position innerhalb der Halterung fixiert. Insbesondere ist die Halterung so ausgebildet, dass sie zur passgenauen Aufnahme der Messzelle geeignet ist und zumindest einen Teil der runden Außenseite, d.h. der Mantelfläche, der zylinderförmigen Messzelle umschließt, wobei die spezielle Ausformung der Halterung den Eintritt, Durchtritt und Austritt des Laserstrahls in, durch bzw. aus der Messzelle nicht beeinträchtigt. Mit Hilfe zweier an den flachen Seiten der zylinderförmigen Messzelle angeordneter kreisförmiger Flachdichtungen wird diese abgedichtet. Die Flachdichtungen haben den gleichen Durchmesser wie die Messzelle und weisen im Bereich der Bohrung der Messzelle eine entsprechende zentrale, runde Öffnung auf. Im Vergleich zu der aus WO 2010/036736 bekannten Vorrichtung zeichnet sich Halterung der erfindungsgemäßen Vorrichtung somit durch eine einfachere Konstruktion aus, die sich zudem leichter und kostengünstiger herstellen lässt.

In einer weiteren bevorzugten Ausführungsform ist die erfindungsgemäße Vorrichtung, umfassend eine Halterung zur Aufnahme des Lasers, der zylinderförmigen Messzelle, des ersten inneren Blendensystems, des zweiten äußeren Blendensystems und der mindestens zwei Detektoren, somit dadurch gekennzeichnet, dass die Halterung in dem Bereich zur Aufnahme der Messzelle drei radial angeordnete Rillen aufweist, über die das flüssige Medium, das die zu vermessende Probe enthält, in die Messzelle geleitet wird und dass die Messzelle mit Hilfe einer Ausformung in der Halterung in der gewünschten Position innerhalb der Halterung fixiert wird, wobei die Mantelfläche der Messzelle zum Teil von der Halterung umschlossen wird und die Messzelle mittels zweier an den flachen Seiten der zylinderförmigen Messzelle angeordneter Flachdichtungen abgedichtet wird.

In der erfindungsgemäßen Vorrichtung erfolgt die Erzeugung von an der Probe gestreutem Licht (Streulicht) mittels eines Laserstrahls, mit dem die in der Messzelle befindliche Probe beleuchtet wird, wobei die Kohärenzlänge des Laserstrahls bevorzugt größer ist als die maximale Größe der zu vermessenden Probe. Verschiedene Laser können als Laserstrahlquelle eingesetzt werden, wie z.B. Diodenlaser, Festkörperlaser oder Gaslaser. Bevorzugt werden Laser mit einer Wellenlänge von 245 nm bis 1200 nm, bevorzugt von 375 nm bis 1064 nm und stärker bevorzugt von 320 nm bis 680 nm, verwendet. Besonders bevorzugt werden Laser mit einer Wellenlänge von 532 nm verwendet.

Die Beleuchtung der in der Messzelle befindlichen Probe erfolgt quer zur Einfüllrichtung des flüssigen Mediums mit der Probe in die Messzelle bzw. quer zur Flussrichtung des flüssigen Mediums mit der Probe in der Messzelle. Im Einzelnen wird das flüssige Medium mit der Probe, das entlang der Achse der Messzelle in/durch die Bohrung der Messzelle geleitet wird, in der Bohrung der Messzelle quer zur Achse der Messzelle von einem Laserstrahl beleuchtet.

Im Zusammenhang mit der vorliegenden Erfindung bedeuteten die Begriffe "quer zur Einfüllrichtung" und "quer zur Flussrichtung" bezüglich der Beleuchtungsrichtung, dass die Ebene in der der Vektor der Einfüllrichtung bzw. der Flussrichtung liegt und die Ebene in der der Vektor des Laserstrahls, mit dem die Probe beleuchtet wird, liegt senkrecht oder im wesentlichen senkrecht aufeinander stehen, d.h. in einem Winkel von 90° +/- 2° zueinander angeordnet sind.

In einer weiteren Ausführungsform betrifft die vorliegende Erfindung ein Verfahren gemäß Anspruch 9 zur Messung des an einer in einem flüssigen Medium befindlichen Probe gestreuten Lichtes. Dabei macht das Verfahren Gebrauch von der zuvor beschriebenen erfindungsgemäßen Vorrichtung mit Ihren einzelnen Komponenten und die oben erklärten Begriffe sowie die oben angegebenen Definitionen beziehen sich auch auf das erfindungsgemäße Verfahren.

Das erfindungsgemäße Verfahren umfasst die folgenden Schritte:
a) Einleitung des flüssigen Mediums, das die Probe enthält, in eine zylinderförmige Messzelle,
b) Beleuchtung der in der Messzelle befindlichen Probe quer zur Einfüllrichtung bzw. quer zur Flussrichtung des flüssigen Mediums in die/der Messzelle mit einem Laserstrahl und
c) Detektion der resultierenden Streulichtstrahlen durch mindestens zwei kreisförmig und konzentrisch um die Messzelle herum angeordnete Detektoren, die das an der Probe gestreute Licht in festgelegten, unterschiedlichen Winkelbereichen erfassen, und ist dadurch gekennzeichnet, dass die Detektoren durch ein erstes inneres Blendensystem und ein zweites äußeres Blendensystem, die um die Achse der Messzelle herum kreisförmig und konzentrisch ausgebildet und angeordnet sind, von Streulichtstrahlen, die nicht innerhalb der jeweils festgelegten Winkelbreiche liegen, und Remissionen abgeschirmt werden.

In einer bevorzugten Ausführungsform ist erfindungsgemäße Verfahren dadurch gekennzeichnet, dass
die zylinderförmige Messzelle, in die die Einleitung des flüssigen Mediums, das die Probe enthält, erfolgt, entlang ihrer Achse eine Bohrung aufweist und aus einem lichtdurchlässigem Material geformt ist,
die Einleitung des flüssigen Mediums, das die Probe enthält, in die Bohrung entlang der Achse der Messzelle erfolgt und die in der Bohrung der Messzelle befindliche Probe quer zur Achse der Messzelle mit einem Laserstrahl beleuchtet wird.

Das erfindungsgemäße Verfahren ermöglicht die Messung des gestreuten Lichts, welches durch die Beleuchtung einer Probe in einem flüssigen Medium mit einem Laserstrahl entsteht. Hierfür wird ein flüssiges Medium, das die Probe enthält, durch eine zentrale Bohrung geleitet, die entlang der Achse durch eine zylinderförmige Messzelle verläuft. Der Laserstrahl verläuft quer zu dieser Bohrung und beleuchtet das flüssige Medium mit der Probe, wodurch Licht an den einzelnen Probenmolekülen oder -teilchen gestreut wird. Um die Messzelle herum sind lichtempfindliche Detektoren angeordnet, die das gestreute Licht empfangen. Die Detektoren befinden sich in einer Ebene mit der Messzelle. Das von den Detektoren empfangene Licht wird bevorzugt in elektrische Signale umgewandelt und zur Berechnung der gewünschten Eigenschaften der Probenmoleküle oder -teilchen, wie z.B. Größe, Masse, Form und Struktur, an entsprechende Verarbeitungsgeräte weitergeleitet. In einer Ebene und auf einer optischen Achse mit der Messzelle und den Detektoren befindet sich zwischen der Messzelle und den Detektoren auch das zuvor beschriebene Doppelblendensystem bestehend aus einem ersten inneren Blendensystem und einem zweiten äußeren Blendensystem, die beide um die Achse der Messzelle herum kreisförmig und konzentrisch ausgebildet und angeordnet sind. Das Doppelblendensystem minimiert Störeinflüsse durch Streulicht aus nicht beobachteten Winkelbereichen und Remissionen und ermöglicht so die störungsfreie Messung von Streulicht bestimmter, festgelegter Winkelbereiche.

In einer weiteren Ausführungsform betrifft die vorliegende Erfindung die Verwendung der erfindungsgemäßen Vorrichtung zur Messung des an einer in einem flüssigen Medium befindlichen Probe gestreuten Lichts.

Anhand der Lichtstreuungseigenschaften einer Probe können dann z.B. deren Größe, Masse, Form und Struktur bestimmt werden. Um eine aussagekräftige Messung der Lichtstreuungseigenschaften zu ermöglichen, müssen die einzelnen Probenmoleküle bzw. -teilchen während der Messung in Fraktionen mit einer jeweils im Wesentlichen einheitlichen Partikelgröße und/oder einer jeweils im Wesentlichen einheitlichen Molmasse vorliegen.

Im Zusammenhang mit der vorliegenden Erfindung bezeichnen die Begriffe "im Wesentlichen einheitliche Partikelgröße" und "im Wesentlichen einheitliche Molmasse" eine monomodale Partikelgrößenverteilung bzw. eine monomodale Molmassenverteilung, wobei die Partikelgröße bzw. die Molmasse einzelner Probenmoleküle bzw. -teilchen um höchstens +/- 15 %, bevorzugt um höchstens +/- 10 %, von dem jeweiligen Mittelwert abweicht.

Die Fraktionierung entsprechender Probenmischungen zum Erhalt von Proben mit einer jeweils im Wesentlichen einheitlichen Partikelgröße und/oder einer jeweils im Wesentlichen einheitlichen Molmasse kann mittels chromatographischer, quasi-chromatographischer oder anderer geeigneter Trennverfahren erfolgen.

Als chromatographische Trennverfahren können zum Beispiel die Verfahren der Hochleistungsflüssigkeitschromatographie (engl. High Performance Liquid Chromatography, HPLC) verwendet werden. In einer bevorzugten Ausführungsform werden die Größenausschlusschromatographie (SEC) oder die Gelpermeationschromatographie (GPC) als spezielle Beispiele möglicher HPLC-Verfahren in der vorliegenden Erfindung verwendet.

Ein geeignetes quasi-chromatographisches Trennverfahren ist die Feldflussfraktionierung (FFF). In einer bevorzugten Ausführungsform werden die symmetrische Fluss-Feldflussfraktionierung, die asymmetrische Fluss-Feldflussfraktionierung, die Sedimentations-Feldflussfraktionierung, wie z.B. die Zentrifugal-Feldflussfraktionierung, sowie die thermische Feldflussfraktionierung zur Fraktionierung einer Probe in der vorliegenden Erfindung verwendet. Besonders bevorzugt wird die symmetrische oder die asymmetrische Fluss-Feldflussfraktionierung verwendet.

In einer Ausführungsform erfolgt die Messung des an der Probe gestreuten Lichts mittels einer Batchmessung. Dafür wird das flüssige Medium, das die Probe enthält, nach vorhergehender Fraktionierung in einer vorher festgelegten Menge in die Bohrung der Messzelle eingefüllt. Anschließend wird die Probe vermessen, wobei während der Messung kein Fluss des flüssigen Mediums mit der Probe durch die Messzelle stattfindet, so dass sich das flüssige Medium mit der Probe während der Messung innerhalb der Messzelle in Ruhe befindet.

In einer weiteren Ausführungsform erfolgt die Messung des an der Probe gestreuten Lichts mittels einer Online Messung. Dafür wird das flüssige Medium mit der.Probe nach vorhergehender Fraktionierung kontinuierlich durch die Bohrung der Messzelle geleitet und die Messung erfolgt über den gesamten Versuchszeitraum. Der Probenfluss durch die Messzelle kann z.B. mittels einer HPLC- oder einer FFF-Anlage erzeugt werden. Bevorzugt wird der Probenfluss durch die Messzelle mittels der HPLC- oder FFF-Anlage erzeugt, die für die zuvor beschriebene vorhergehende Fraktionierung der Probe verwendet wurde.

In einer bevorzugten Ausführungsform erfolgt die Messung des an der Probe gestreuten Lichts mittels einer Online Messung.

In einer weiteren Ausführungsform kann die erfindungsgemäße Vorrichtung dafür mit einer HPLC-Anlage, wie z.B. einer SEC-oder einer GPC-Anlage, oder einer FFF-Anlage gekoppelt werden. Bevorzugt wird die erfindungsgemäße Vorrichtung mit einer FFF-Anlage gekoppelt, besonders bevorzugt mit einer FFF-Anlage für die symmetrische Fluss-Feldflussfraktionierung, die asymmetrische Fluss-Feldflussfraktionierung, die Sedimentations-Feldflussfraktionierung, wie z.B. die Zentrifugal-Feldflussfraktionierung, sowie die thermische Feldflussfraktionierung und insbesondere bevorzugt mit einer FFF-Anlage für die symmetrische oder die asymmetrische Fluss-Feldflussfraktionierung.

In einer alternativen Ausführungsform können Batchmessungen auch an einer unfraktionierten Probe durchgeführt werden.

### Kurze Figurenbeschreibung

Figur 1 zeigt die Draufsicht einer bevorzugten Ausführungsform der erfindungsgemäßen Vorrichtung.
Figur 2 zeigt die Seitenansicht einer bevorzugten Ausführungsform der erfindungsgemäßen Vorrichtung.
Figur 3 zeigt die dreidimensionale Ansicht eines Doppelblendensystems der erfindungsgemäßen Vorrichtung.

### Wege zur Ausführung der Erfindung

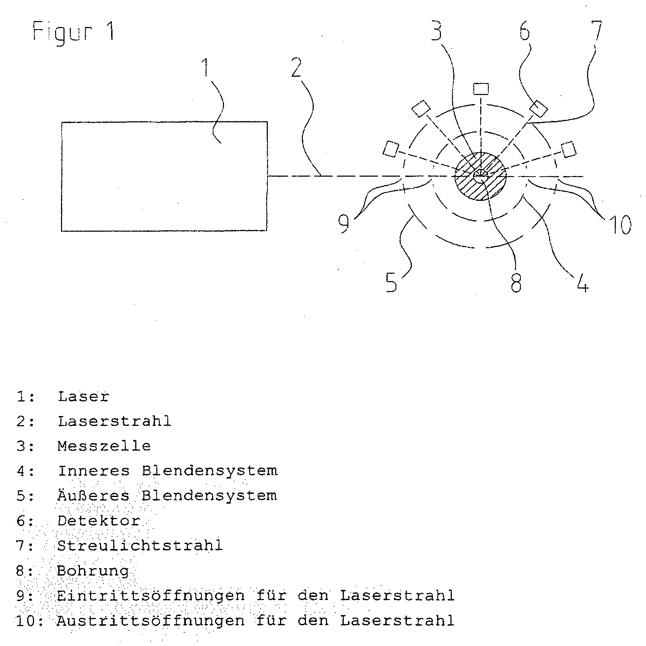

Die Figur 1 zeigt den schematischen Aufbau einer bevorzugten Ausführungsform der erfindungsgemäßen Vorrichtung in einer Draufsicht.

Die gezeigte erfindungsgemäße Vorrichtung umfasst einen Laser (1), eine zylinderförmige Messzelle (3) mit einer zentralen Bohrung (8) entlang ihrer Achse, ein erstes inneres Blendensystem (4) und ein zweites äußeres Blendensystem (5), die beide um die Achse der Messzelle (3) herum kreisförmig und konzentrisch ausgebildet und angeordnet sind, und fünf Detektoren (6), wobei die Detektoren (6) kreisförmig und konzentrisch um die Achse der Messzelle (3) herum außerhalb des zweiten äußeren Blendensystems (5) angeordnet sind, so dass sie das an der Probe gestreute Licht in festgelegten, unterschiedlichen Winkelbereichen erfassen.

Das erste innere Blendensystem (4) und das zweite äußere Blendensystem sind als kammförmige Schlitzblenden ausgebildet und weisen zusätzlich jeweils eine Eintrittsöffnung (9) und eine Austrittsöffnung (10) für den Laserstrahl (2) auf.

Der Laserstrahl (2) verläuft quer zu der zentralen Bohrung (8) der Messzelle (3) und beleuchtet ein flüssiges Medium, das eine Probe enthält und sich innerhalb der zentralen Bohrung (8) der Messzelle (3) befindet. Dadurch wird Licht an den einzelnen Probenmolekülen oder -teilchen gestreut. Die erzeugten Streulichtstrahlen (7) werden von kreisförmig und konzentrisch um die Messzelle herum angeordneten lichtempfindlichen Detektoren (6) empfangen, wobei die Detektoren (6) durch das erste innere Blendensystem (4) und das zweite äußere Blendensystem (5) von Streulichtstrahlen, die nicht innerhalb der jeweils festgelegten Winkelbreiche liegen, und Remissionen abgeschirmt werden.

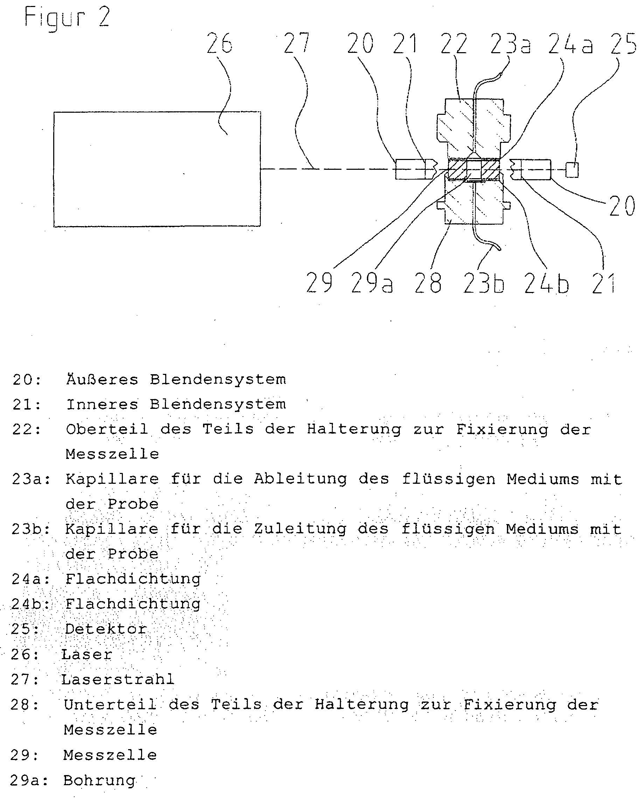

Die Figur 2 zeigt den schematischen Aufbau einer bevorzugten Ausführungsform der erfindungsgemäßen Vorrichtung in einer Seitenansicht.

Die gezeigte erfindungsgemäße Vorrichtung umfasst einen Laser (26), eine zylinderförmige Messzelle (29) mit einer zentralen Bohrung (29a) entlang ihrer Achse, ein erstes inneres Blendensystem (21) und ein zweites äußeres Blendensystem (20), die beide um die Achse der Messzelle (29) herum kreisförmig und konzentrisch ausgebildet und angeordnet sind, und mehrere Detektoren (25) (hier ist auf Grund der Darstellung nur ein Detektor gezeigt), wobei die Detektoren (25) außerhalb des zweiten äußeren Blendensystems (20) angeordnet sind, so dass sie das an der Probe gestreute Licht in festgelegten, unterschiedlichen Winkelbereichen erfassen.

Die Halterung der erfindungsgemäßen Vorrichtung ist so ausgebildet, dass sie ein oberes Teil (22) und ein unteres Teil (28) zur passgenauen Aufnahme und damit zur Fixierung der Messzelle (29) in der Halterung umfasst. Der untere Teil (28) weist eine Ausformung auf, in die die Messzelle (29) passgenau aufgenommen wird und die zumindest einen Teil der runden Außenseite, d.h. der Mantelfläche, der zylinderförmigen Messzelle (29) umschließt. Die Höhe der Ausformung ist so gewählt, dass Eintritt, Durchtritt und Austritt des Laserstrahls (27) in, durch bzw. aus der Messzelle (29) nicht beeinträchtigt werden. Das obere Teil (22) hat eine flache Unterseite und umschließt die Messzelle nicht. Die Messzelle (29) wird zwischen dem unteren Teil (28) und dem oberen Teil (22) fest fixiert und mit Hilfe zweier an den flachen Seiten der zylinderförmigen Messzelle (29) angeordneter kreisförmiger Flachdichtungen (24a, 24b) abgedichtet. Die Flachdichtungen (24a, 24b) haben den gleichen Durchmesser wie die Messzelle (29) und weisen im Bereich der Bohrung (29a) der Messzelle eine entsprechende zentrale, runde Öffnung auf.

In der gezeigten Ausführungsform der erfindungsgemäßen Vorrichtung wird ein flüssiges Medium, das die Probe enthält, während der Messung mittels einer Zuleitungskapillare (23b) und einer Ableitungskapillare (23a) durch die Bohrung (29a) der Messzelle (29) geleitet.

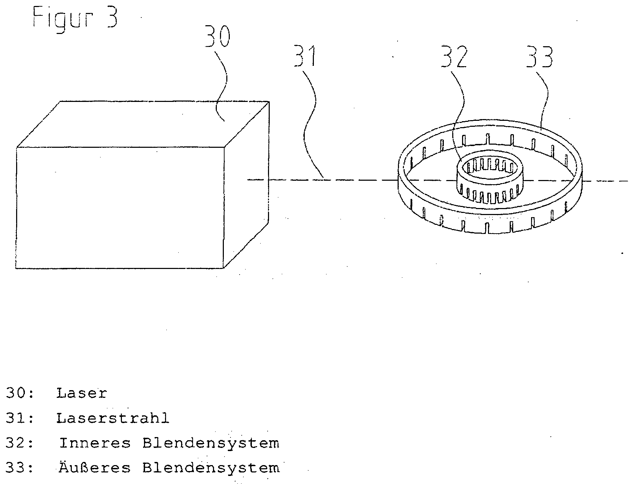

Die Figur 3 zeigt die dreidimensionale Ansicht eines ersten inneren Blendensystems (32) und eines zweiten äußeren Blendensystems (33), die kreisförmig und konzentrisch ausgebildet und angeordnet sind und zusammen ein Doppelblendensystem der erfindungsgemäßen Vorrichtung bilden. Die gezeigten beiden Blendensysteme (32, 33) sind jeweils als kammförmige Schlitzblenden ausgebildet.

## Patentansprüche

1. Vorrichtung zur Messung der Lichtstreuungseigenschaften einer Probe in einem flüssigen Medium, wobei das flüssige Medium mit der Probe in einer Messzelle (3) quer zur Einfüllrichtung bzw. quer zur Flussrichtung des flüssigen Mediums in die/der Messzelle (3) von einem Laserstrahl (2) beleuchtet wird, umfassend einen Laser (1), eine zylinderförmige Messzelle (3), ein erstes inneres Blendensystem (4), ein zweites äußeres Blendensystem (5) und mindestens zwei Detektoren (6), wobei
die Detektoren (6) außerhalb des zweiten äußeren Blendensystems (5)angeordnet sind, so dass sie das an der Probe gestreute Licht in festgelegten, unterschiedlichen Winkelbereichen erfassen,
**dadurch gekennzeichnet, dass** das erste innere Blendensystem (4) und das zweite äußere Blendensystem (5) um die Achse der Messzelle (3) herum kreisförmig und konzentrisch ausgebildet und angeordnet sind, wobei das zweite äußere Blendensystem (5) derart angeordnet ist, dass nur solches Licht eines bestimmten Winkelbereichs in den entsprechenden Detektor (6) fällt, welches das erste innere Blendensystem (4) passiert hat, und
die Messzelle (3), das erste innere Blendensystem (4) und das zweite äußere Blendensystem (5) sowie die Detektoren (6) auf einer optischen Achse liegen, so dass die einzelnen Detektoren (6) festgelegte, unterschiedliche Winkelbereiche des an der Probe gestreuten und aus der Messzelle (3) austretenden Lichts erfassen.

2. Vorrichtung gemäß Anspruch 1, wobei
die zylinderförmige Messzelle (3) entlang ihrer Achse eine Bohrung (8) aufweist, welche die Zu- und Ableitung des flüssigen Mediums, das die Probe enthält, zulässt, und aus einem lichtdurchlässigem Material geformt ist, das den Eintritt, Durchtritt und Austritt des Laserstrahls (2) erlaubt und
das flüssige Medium mit der Probe entlang der Achse der Messzelle in/durch die Bohrung (8) der Messzelle (3) geleitet wird und in der Bohrung (8) der Messzelle (3) quer zur Achse der Messzelle (3) von dem Laserstrahl (2) beleuchtet wird.

3. Vorrichtung gemäß Anspruch 1 oder 2, **dadurch gekennzeichnet, dass** das erste innere Blendensystem (4) und das zweite äußere Blendensystem (5) jeweils als Schlitzblenden ausgebildet sind, wobei die Zahl der Schlitze in den beiden Blendensystemen der Zahl der Detektoren (6) entspricht und die Blendensysteme zusätzlich jeweils eine Eintrittsöffnung (9) und eine Austrittsöffnung (10) für den Laserstrahl (2) aufweisen.

4. Vorrichtung gemäß einem der vorstehenden Ansprüche, **dadurch gekennzeichnet, dass** das erste innere Blendensystem (4) und das zweite äußere Blendensystem (5) in Abhängigkeit vom beobachteten Winkelbereich des an der Probe gestreuten Lichts unterschiedliche Schlitzbreiten haben, wobei die Schlitzbreiten des ersten inneren Blendensystems (4) und des zweiten äußeren Blendensystems (5) für einen gegebenen zu beobachtenden Winkelbereich des an der Probe gestreuten Lichts gleich sind.

5. Vorrichtung nach einem der vorstehenden Ansprüche, **dadurch gekennzeichnet, dass die** Messzelle (3) aus Glas, Polymer oder einer Kombination der genannten Materialien oder einer Flüssigkeit hergestellt ist und eine Brechzahl aufweist, die der Brechzahl des flüssigen Mediums, das die zu vermessende Probe enthält, im Wesentlichen entspricht und die höher ist als die Brechzahl von Luft.

6. Vorrichtung nach einem der vorstehenden Ansprüche, **dadurch gekennzeichnet, dass** die Detektoren (6) in unterschiedlichen, festgelegten Winkeln von 7° bis 164°, bezogen auf den Strahlengang des Lasers (1) durch die Messzelle (3), angeordnet sind.

7. Vorrichtung nach einem der vorstehenden Ansprüche, **dadurch gekennzeichnet, dass** die Vorrichtung 2-25, bevorzugt 7-21 und besonders bevorzugt 7, 14 oder 21 Detektoren (6) umfasst.

8. Vorrichtung nach einem der vorstehenden Ansprüche, ferner umfassend eine Halterung zur Aufnahme des Lasers (1), der zylinderförmigen Messzelle (3), des ersten inneren Blendensystems (4), des zweiten äußeren Blendensystems (5) und der mindestens zwei Detektoren (6), **dadurch gekennzeichnet, dass**
die Halterung im dem Bereich zur Aufnahme der Messzelle (3) drei radial angeordnete Rillen aufweist, über die das flüssige Medium, das die zu vermessende Probe enthält, in die Messzelle (3) geleitet wird und
die Messzelle mit Hilfe einer Ausformung in der Halterung in der gewünschten Position innerhalb der Halterung fixiert wird, wobei die Mantelfläche der Messzelle zum Teil von der Halterung umschlossen wird und die Messzelle mittels zweier an den flachen Seiten der zylinderförmigen Messzelle angeordneter Flachdichtungen abgedichtet wird.

9. Verfahren zur Messung des an einer in einem flüssigen Medium befindlichen Probe gestreuten Lichts, umfassend die folgenden Schritte:
a) Einleitung des flüssigen Mediums, das die Probe enthält, in eine zylinderförmige Messzelle (3),
b) Beleuchtung der in der Messzelle (3) befindlichen Probe quer zur Einfüllrichtung bzw. quer zur Flussrichtung des flüssigen Mediums in die/der Messzelle (3) mit einem Laserstrahl (2) und
c) Detektion der resultierenden Streulichtstrahlen (7) durch mindestens zwei kreisförmig und konzentrisch um die Messzelle (3) herum angeordnete Detektoren (6), die das an der Probe gestreute Licht in festgelegten, unterschiedlichen Winkelbereichen erfassen,
**dadurch gekennzeichnet, dass** die Detektoren durch ein erstes inneres Blendensystem (4) und ein zweites äußeres Blendensystem (5), die um die Achse der Messzelle (3) herum kreisförmig und konzentrisch ausgebildet und angeordnet sind, von Streulichtstrahlen, die nicht innerhalb der jeweils festgelegten Winkelbreiche liegen, und Remissionen abgeschirmt werden, wobei das zweite äußere Blendensystem (5) derart angeordnet ist, dass nur solches Licht eines bestimmten Winkelbereichs in den entsprechenden Detektor (6) fällt, welches das erste innere Blendensystem (4) passiert hat, und
die Messzelle (3), das erste innere Blendensystem (4) und das zweite äußere Blendensystem (5) sowie die Detektoren (6) auf einer optischen Achse liegen, so dass die einzelnen Detektoren (6) festgelegte, unterschiedliche Winkelbereiche des an der Probe gestreuten und aus der Messzelle (3) austretenden Lichts erfassen.

10. Verfahren gemäß Anspruch 9, wobei
die zylinderförmige Messzelle (3), in die die Einleitung des flüssigen Mediums, das die Probe enthält, erfolgt, entlang ihrer Achse eine Bohrung (8) aufweist und aus einem lichtdurchlässigem Material geformt ist,
die Einleitung des flüssigen Mediums, das die Probe enthält, in die Bohrung (8) entlang der Achse der Messzelle (3) erfolgt und
die in der Bohrung (8) der Messzelle (3) befindliche Probe quer zur Achse der Messzelle mit einem Laserstrahl (2) beleuchtet wird.

11. Verwendung einer Vorrichtung gemäß einem der Ansprüche 1-8 zur Messung des an einer in einem flüssigen Medium befindlichen Probe gestreuten Lichts.

12. Verwendung gemäß Anspruch 11, wobei die Messung des an der Probe gestreuten Lichts mittels einer Batchmessung oder einer Online Messung erfolgt.

13. Verwendung gemäß Anspruch 12, wobei die Probe vor der Messung mittels eines chromatographischen oder eines quasichromatographischen Trennverfahrens in einzelne Fraktionen mit einer jeweils im Wesentlichen einheitlichen Partikelgröße und/oder einer jeweils im Wesentlichen einheitlichen Molmasse aufgetrennt wurde.

14. Verwendung gemäß Anspruch 13, wobei die Probentrennung mittels HPLC, wie z.B. Größenausschlusschromatographie (SEC) oder Gelpermeationschromatographie (GPC), oder Feldflussfraktionierung erfolgt.

## Claims

1. Apparatus for measuring the light scattering properties of a specimen in a liquid medium, wherein the liquid medium with the specimen is illuminated in a measuring cell (3) by a laser beam (2) transversely to the direction of filling or transversely to the direction of flow of the liquid medium into/in the measuring cell (3), comprising a laser (1) a cylindrical measuring cell (3), a first inner diaphragm system (4), a second outer diaphragm system (5) and at least two detectors (6), wherein
the detectors (6) are arranged outside the second outer diaphragm system (5) so that they detect the light scattered at the specimen within fixed, different angle ranges,
**characterised in that** the first inner diaphragm system (4) and the second outer diaphragm system (5) are constructed and arranged in circles and conconcentrically round the axis of the measuring cell (3), wherein the second outer diaphragm system (5) is arranged in such a way that only such light of the given angle range as has passed through the first inner diaphragm system (4) enters the corresponding detector (6), and
the measuring cell (3), the first inner diaphragm system (4) and the second outer diaphragm system (5) as well as the detectors (6) lie on an optical axis, so that the individual detectors (6) detect fixed, different angle ranges of the light scattered at the specimen and emerging from the measuring cell (3).

2. Apparatus according to claim 1, wherein the cylindrical measuring cell (3) has, along an axis, a bore (8) which allows supply and removal of the liquid medium containing the specimen, and is formed from a light-permeable material which allows entry, passage and exit of the laser beam (2) and the liquid medium with the specimen is conducted along the axis of the measuring cell into/through the bore (8) of the measuring cell (3) and is illuminated in the bore (8) of the measuring cell (3) by the laser beam (2) transversely to the axis of the measuring cell (3).

3. Apparatus according to claim 1 or 2, **characterised in that** the first inner diaphragm system (4) and the second outer diaphragm system (5) are in each case constructed as slit diaphragms, wherein the number of slits in the two diaphragm systems corresponds to the number of detectors (6) and the diaphragm systems in addition each have an inlet opening (9) and an outlet opening (10) for the laser beam (2).

4. Apparatus according to any of the preceding claims, **characterised in that** the first inner diaphragm system (4) and the second outer diaphragm system (5) have different slit widths depending on the observed angle range of the light scattered at the specimen, wherein the slit widths of the first inner diaphragm system (4) and of the second outer diaphragm system (5) are the same for a given angle range of the light scattered at the specimen which is to be observed.

5. Apparatus according to any of the preceding claims, **characterised in that** the measuring cell (3) is made from glass, polymer or a combination of the above materials or a liquid and has a refractive index which substantially corresponds to the refractive index of the liquid medium containing the specimen to be measured and which is higher than the refractive index of air.

6. Apparatus according to any of the preceding claims, **characterised in that** the detectors (6) are arranged at different, fixed angles from 7° to 164°, referred to the beam path of the laser (1) through the measuring cell (3).

7. Apparatus according to any of the preceding claims, **characterised in that** the apparatus comprises 2-25, preferably 7-21 and particularly preferably 7, 14 or 21 detectors (6).

8. Apparatus according to any of the preceding claims, further comprising a support for holding the laser (1), the cylindrical measuring cell (3), the first inner diaphragm system (4), the second outer diaphragm system (5) and the at least two detectors (6), **characterised in that** the support has, in the region for holding the measuring cell (3), three radially arranged grooves through which the liquid medium containing the specimen to be measured is conducted into the measuring cell (3) and the measuring cell is fixed in the support in the desired position within the support by means of a projection, wherein the shell surface of the measuring cell is partly surrounded by the support and the measuring cell is sealed by means of two flat seals arranged on the flat sides of the cylindrical measuring cell.

9. Method for measuring the light scattered at a specimen located in a liquid medium, comprising the following steps:
a) introducing the liquid medium containing the specimen into a cylindrical measuring cell (3),
b) illuminating the specimen located in the measuring cell (3) transversely to the direction of filling or transversely to the direction of flow of the liquid medium into/in the measuring cell (3) with a laser beam (2), and
c) detection of the resulting scattered light beams (7) by at least two detectors (6) which are arranged in circles and concentrically round the measuring cell (3) and which detect the light scattered at the specimen in fixed, different angle ranges,
**characterised in that** the detectors are shielded from scattered light beams which are not located within the respectively fixed angle ranges, and from diffuse reflectance, by a first inner diaphragm system (4) and a second outer diaphragm system (5) which are constructed and arranged in circles and concentrically round the axis of the measuring cell (3), wherein the second outer diaphragm system (5) is arranged in such a way that only such light of a given angle range as has passed through the first inner diaphragm system (4) enters the corresponding detector (6), and the measuring cell (3), the first inner diaphragm system (4) and the second outer diaphragm system (5) as well as the detectors (6) lie on an optical axis, so that the individual detectors (6) detect fixed, different angle ranges of the light scattered at the specimen and emerging from the measuring cell (3).

10. Method according to claim 9, wherein the cylindrical measuring cell (3) into which the liquid medium containing the specimen is introduced has, along its axis, a bore (8) and is formed from a light-permeable material, the liquid medium containing the specimen is introduced into the bore (8) along the axis of the measuring cell (3), and the specimen located in the bore (8) of the measuring cell (3) is illuminated with a laser beam (2) transversely to the axis of the measuring cell.

11. Use of an apparatus according to any of claims 1-8 for measurement of the light scattered at specimen located in a liquid medium.

12. Use according to claim 11, wherein measurement of the light scattered at the specimen is effected by batch measurement or online measurement.

13. Use according to claim 12, wherein, before measurement, the specimen is separated by a chromatographic or quasi-chromatographic separating process into individual fractions with in each case a uniform particle size and/or in each case a uniform molecular weight.

14. Use according to claim 13, wherein sample separation is effected by HPLC, e.g. size exclusion chromatography (SEC) or gel permeation chromatography (GPC), or field flow fractionation.

## Revendications

1. Dispositif de mesure des propriétés de diffusion de lumière d'un échantillon dans un milieu liquide, dans lequel le milieu liquide est éclairé avec l'échantillon dans une cellule de mesure (3) transversalement à la direction de remplissage ou transversalement à la direction d'écoulement du milieu liquide dans la cellule de mesure (3) par un rayon laser (2), comprenant un laser (1), une cellule de mesure de forme cylindrique (3), un premier système à diaphragme interne (4), un second système à diaphragme externe (5) et au moins deux détecteurs (6), dans lequel
les détecteurs (6) sont agencés à l'extérieur du second système à diaphragme externe (5) de sorte qu'ils recueillent la lumière diffusée sur l'échantillon dans différentes zones angulaires établies,
**caractérisé en ce que** le premier système à diaphragme interne (4) et le second système à diaphragme externe (5) sont formés et agencés en forme circulaire et de manière concentrique autour de l'axe de la cellule de mesure (3), dans lequel le second système à diaphragme externe (5) est agencé de sorte que seule tombe dans le détecteur correspondant (6) la lumière d'une zone angulaire déterminée qui est passée par le premier système à diaphragme interne (4), et
la cellule de mesure (3), le premier système à diaphragme interne (4) et le second système à diaphragme externe (5) ainsi que les détecteurs (6) se trouvent sur un axe optique afin que les détecteurs individuels (6) recueillent différentes zones angulaires établies de la lumière diffusée sur l'échantillon et sortant de la cellule de mesure (3).

2. Dispositif selon la revendication 1, dans lequel :
la cellule de mesure de forme cylindrique (3) présente le long de son axe un alésage (8) qui permet l'alimentation et l'évacuation du milieu liquide qui contient l'échantillon et est formée d'un matériau transparent, qui permet l'entrée, le passage et la sortie du rayon laser (2) et
le milieu liquide avec l'échantillon est dirigé le long de l'axe de la cellule de mesure dans ou à travers l'alésage (8) de la cellule de mesure (3) et est éclairé par le rayon laser (2) dans l'alésage (8) de la cellule de mesure (3) transversalement à l'axe de la cellule de mesure (3).

3. Dispositif selon la revendication 1 ou 2, **caractérisé en ce que** le premier système à diaphragme interne (4) et le second système à diaphragme externe (5) se présentent respectivement sous la forme de diaphragmes à fentes, dans lequel le nombre des fentes dans les deux systèmes à diaphragme correspond au nombre des détecteurs (6) et les systèmes à diaphragme présentent en outre respectivement une ouverture d'entrée (9) et une ouverture de sortie (10) pour le rayon laser (2).

4. Dispositif selon l'une quelconque des revendications précédentes, **caractérisé en ce que** le premier système à diaphragme interne (4) et le second système à diaphragme externe (5) ont des largeurs de fentes différentes en fonction de la zone angulaire observée de la lumière diffusée sur l'échantillon, dans lequel les largeurs de fentes du premier système à diaphragme interne (4) et du second système à diaphragme externe (5) sont égales pour une zone angulaire donnée à observer de la lumière diffusée sur l'échantillon.

5. Dispositif selon l'une quelconque des revendications précédentes, **caractérisé en ce que** la cellule de mesure (3) est formée de verre, d'un polymère ou d'une combinaison des matériaux cités ou d'un liquide et présente un indice de réfraction qui correspond sensiblement à l'indice de réfraction du milieu liquide qui contient l'échantillon à mesurer et est plus élevé que l'indice de réfraction de l'air.

6. Dispositif selon l'une quelconque des revendications précédentes, **caractérisé en ce que** les détecteurs (6) sont agencés sous différents angles établis de 7° à 164°, par rapport à la trajectoire du laser (1) à travers la cellule de mesure (3).

7. Dispositif selon l'une quelconque des revendications précédentes, **caractérisé en ce que** le dispositif comprend 2 à 25, de préférence 7 à 21 et tout particulièrement 7, 14 ou 21 détecteurs (6).

8. Dispositif selon l'une quelconque des revendications précédentes, comprenant en outre un support pour recevoir le laser (1), la cellule de mesure de forme cylindrique (3), le premier système à diaphragme interne (4), le second système à diaphragme externe (5) et les au moins deux détecteurs (6), **caractérisé en ce que**
le support présente dans la zone de réception de la cellule de mesure (3) trois rainures agencées radialement via lesquelles le milieu liquide qui contient l'échantillon à mesurer est acheminé dans la cellule de mesure (3) et
la cellule de mesure est fixée à l'aide d'une garniture dans le support dans la position souhaitée à l'intérieur du support, dans lequel la surface de gainage de la cellule de mesure est entourée en partie par le support et la cellule de mesure est étanchée au moyen de deux joints plats agencés sur les faces plates de la cellule de mesure en forme de cylindre.

9. Procédé de mesure de la lumière diffusée sur un échantillon situé dans un milieu liquide, comprenant les étapes consistant à :
a) introduire le milieu liquide qui contient l'échantillon dans une cellule de mesure en forme de cylindre (3),
b) éclairer l'échantillon se trouvant dans la cellule de mesure (3) transversalement à la direction de remplissage ou transversalement à la direction d'écoulement du milieu liquide dans la cellule de mesure (3) par un rayon laser (2) et
c) détecter les rayons de lumière diffusée obtenus (7) par au moins deux détecteurs (6), agencés en forme de cercle et concentriquement autour de la cellule de mesure (3), qui recueillent la lumière diffusée sur l'échantillon dans différentes zones angulaires établies,
**caractérisé en ce que** les détecteurs sont protégés par un premier système à diaphragme interne (4) et un second système à diaphragme externe (5), qui sont formés et agencés en forme de cercle et de manière concentrique autour de l'axe de la cellule de mesure (3), de rayons de lumière diffusée qui ne se situent pas dans les zones angulaires respectivement établies, et de rémissions, dans lequel le second système à diaphragme externe (5) est agencé de sorte que tombe dans le détecteur correspondant (6) seulement la lumière d'une zone angulaire déterminée qui est passé par le premier système à diaphragme interne (4), et
la cellule de mesure (3), le premier système à diaphragme interne (4) et le second système à diaphragme externe (5) ainsi que les détecteurs (6) se trouvent sur un axe optique de sorte que les détecteurs individuels (6) recueillent différentes zones angulaires établies de la lumière diffusée sur l'échantillon et sortant de la cellule de mesure (3).

10. Procédé selon la revendication 9, dans lequel :
la cellule de mesure de forme cylindrique (3), dans laquelle se fait l'introduction du milieu liquide qui contient l'échantillon, présente le long de son axe un alésage (8) et est formée d'un matériau transparent,
l'introduction du milieu liquide qui contient l'échantillon dans l'alésage (8) se fait le long de l'axe de la cellule de mesure (3) et
l'échantillon se trouvant dans l'alésage (8) de la cellule de mesure (3) est éclairé par un rayon laser (2) transversalement à l'axe de la cellule de mesure.

11. Utilisation d'un dispositif selon l'une quelconque des revendications 1 à 8 pour mesurer la lumière diffusée sur un échantillon se trouvant dans un milieu liquide.

12. Utilisation selon la revendication 11, dans laquelle la mesure de la lumière diffusée sur l'échantillon se fait par une mesure discontinue ou par une mesure en ligne.

13. Utilisation selon la revendication 12, dans laquelle l'échantillon est séparé, avant la mesure, au moyen d'un procédé de séparation chromatographique ou quasi-chromatographique en fractions individuelles ayant une taille particulaire respectivement sensiblement unitaire et/ou une masse moléculaire respectivement sensiblement unitaire.

14. Utilisation selon la revendication 13, dans laquelle la séparation de l'échantillon se fait par HPLC, notamment, par exemple, par chromatographie par exclusion stérique (SEC) ou par chromatographie à perméation de gel (GPC) ou par fractionnement de flux de champ.
